# EUROPÄISCHE PATENTSCHRIFT

(11) **EP 1 663 910 B1**
(45) Veröffentlichungstag und Bekanntmachung des Hinweises auf die Patenterteilung: **07.12.2016**
(21) Anmeldenummer: 04740277.1
(22) Anmeldetag: 24.06.2004
(51) Int. Cl.: C05C 9/00, C05G 3/08

(54) **VERFAHREN ZUR HERSTELLUNG VON DICYANDIAMID UND 1,2,4-TRIAZOL ALS NITRIFIKATIONSHEMMER ENTHALTENDE DÜNGEMITTELGRANULATE AUF HARNSTOFFBASIS**
METHOD FOR PRODUCING UREA BASED FERTILISER GRANULATES, CONTAINING DICYANDIAMIDE AND 1,2,4-TRIAZOLE AS NITRIFICATION INHIBITORS
PROCEDE DE FABRICATION DE DICYANODIAMIDE ET DE 1,2,4-TRIAZOL EN TANT QUE GRANULES D'ENGRAIS A BASE D'UREE CONTENANT DES INHIBITEURS DE NITRIFICATION

(30) Priorität: 15.09.2003 DE 10342551
(43) Veröffentlichungstag der Anmeldung: 07.06.2006
(73) Patentinhaber: SKW STICKSTOFFWERKE PIESTERITZ GmbH, 06886 Lutherstadt Wittenberg (DE)
(72) Erfinder: RADICS, Ute, 06888 Dabrun (DE); NICLAS, Hans-Joachim, 12435 Berlin (DE); REINHARDT, Petra, 06847 Dessau (DE); LÖFFLER, Ralph, 06766 Wolfen (DE); NIENDORF, Klaus, 06886 Lutherstadt Wittenberg (DE); WACHSMUTH, Hans-Joachim, 06888 Mühlanger (DE); FRIEDRICH, Hans-Jürgen, 06886 Lutherstadt Wittenberg (DE); LANGE, Heinz, 06886 Lutherstadt Wittenberg (DE)
(74) Vertreter: Schneider, Michael
(86) Internationale Anmeldenummer: PCT/EP2004/006864
(87) Internationale Veröffentlichungsnummer: WO 2005/033046

(56) Entgegenhaltungen:
- US-A- 5 914 104
- US-A- 5 951 736
- US-A1- 2002 098 983
- DATABASE WPI Section Ch, Week 199438 Derwent Publications Ltd., London, GB; Class A14, AN 1994-305857 XP002292933 & JP 06 231620 A (YAZAKI CORP) 19. August 1994 (1994-08-19)

## Beschreibung

Die vorliegende Erfindung betrifft ein Verfahren zur Herstellung von Dicyandiamid und 1,2,4-Triazol als Nitrifikationshemmer enthaltenden Düngemittelgranulaten auf Harnstoffbasis. Es ist allgemein bekannt, dass amid- und/oder ammoniumhaltige Dünger im Boden der Nitrifikation zum Nitrat unterliegen. In der Regel verläuft der Nitrifikationsprozess schneller als die Nährstoffaufhahme durch die Pflanze, was durch Auswaschung des Nitrats in tiefere, den Pflanzenwurzeln unzugängliche Bodenregionen oder eine unter anaeroben Bedingungen ablaufende Reduktion des Nitrits und Nitrats zu N₂ und/oder N₂O zu Düngungsverlusten und Umweltbeeinträchtigungen führt.

Möglichkeiten, durch Verzögerung und Regulierung des Nitrifikationsprozesses eine verbesserte N-Ausnutzung bei gleichzeitiger Zurückdrängung von Umweltbelastungen durch die Stickstoffdüngung zu erreichen, ergeben sich durch Einsatz von Nitrifikationsinhibitoren. Als wirksame Nitrifikationsinhibitoren ist eine große Zahl verschiedener Substanzen und Substanzgemische vorgeschlagen worden (siehe u. a. M. E. TRENKEL, Improving Fertilizer Use Efficiency - Controlled-Release and Stabilized Fertilizers in Agriculture; International Fertilizer Industry Association (ifa), Paris Dec. 1997).

Für den praktischen Einsatz, insbesondere in Feststoffdüngern, eignen sich nur einige wenige der vorgeschlagenen Wirkstoffe zur Nitrifikationshemmung aufgrund ihrer chemischen und physikalischen Eigenschaften, die einer stabilen Düngemittel-Wirkstoff-Formulierung entgegenstehen. Ein im Einsatz mit festen Harnstoffdüngern bewährter nitrifikationshemmender Wirkstoff ist das Dicyandiamid (vgl. DE 27 14 601, DE 29 22 436, DD 159 988, DE 35 43 920, DE 32 37 905, US 4,309,206, EP-A 19881, EP 0 908 430). Die technischen Lösungen gehen von der gemeinsamen Granulation einer Zumischung von Dicyandiamid zu einer konzentrierten wässrigen Harnstofflösung oder zu einer Harnstoffschmelze aus, die nachfolgend in unterschiedlicher Weise in die Granalienform gebracht werden. Zur Gewährleistung einer sicheren nitrifikationsinhibierenden Wirkung sind allerdings vergleichsweise hohe Anteile an Dicyandiamid in den Harnstoff einzuarbeiten. In EP 0 908 430 werden beispielsweise 3 bis 10 Gew.-% Dicyandiamid bezogen auf das Gewicht der Harnstoffschmelze eingebracht.

Im B emühen, die hohen und damit kostenaufwendigen Einsatzmengen an Dicyandiamid herabzusetzen, wurden Kombinationen des Dicyandiamids mit weiteren die Nitrifikation hemmenden Verbindungen vorgeschlagen. So wird in DD 222 471 die synergistisch wirkende Kombination von Dicyandiamid mit substituierten Pyrazolen, bevorzugt mit 3-Methylpyrazol, geschützt. Da 3-Methylpyrazol flüssig ist und darüber hinaus einen hohen Dampfdruck besitzt, ist ein Einsatz dieser Kombination auf Flüssigdüngemittel beschränkt.

In EP 0 746 537 wird unter anderem eine synergistische nitrifikationshemmende Wirkung der beiden für sich allein nur mäßig wirksamen Verbindungen Dicyandiamid und 1,2,4-Triazol festgestellt. Im Gewichtsverhältnis 10 : 1 vermischt, zeigt die Wirkstoffkombination Dicyandiamid/1,2,4-Triazol bei einem Fünftel der N-bezogenen Einsatzmenge des Dicyandiamids allein bereits die gleiche nitrifikationsinhibierende Wirkung. Das erlaubt eine niedrigere Dosierung des Wirkstoffgemisches zum Harnstoff, was aus Kostengründen wünschenswert ist.

US 2002/098983 A1 betrifft ein Absorptionsmittel für die Landwirtschaft, das Dünger, Insektizide, Herbizide und Fungizide verzögert freisetzen kann sowie ein Verfahren zu dessen Herstellung.

US-A-5 951 736 offenbart Wirkstoffkombinationen zur Hemmung oder Steuerung der Nitrifikation.

EP 06 231 620 A offenbart ein Verfahren zur Formulierung von PVC-Harzpaste mit Triazol.

US-A-5 914 104 beschreibt die Verwendung von Alaun zur Hemmung der Ammoniak-Verflüchtigung und zur Verminderung der Phosphor-Löslichkeit in Hühnermist.

Feststoffdünger mit zugesetzten Nitrifikationsinhibitoren müssen - ebenso wie Dünger ohne Zusatzstoffe - als stabile, abriebfeste und lose in unklimatisierten Lagerhallen über mehrere Monate verbackungsfrei zu lagernde Granalien bereitgestellt werden. Bei den mit Nitrifikationsinhibitoren versetzten Düngern kommt noch hinzu, dass während einer mehrmonatigen Lagerung keine Wirkstoffverluste eintreten dürfen.

Der Restwassergehalt in den Granalien muss zur Gewährleistung einer problemlosen Lagerung möglichst niedrig sein. Des Weiteren ist bei Harnstoff und harnstoffhaltigen Düngern ein begrenzter Biuretgehalt aufgrund seiner phytotoxischen. Wirkung ein vorgegebenes Qualitätskriterium. Im Falle der N-stabilisierten Dünger unter Einsatz von Wirkstoffkombinationen muss das vorgegebene Gewichtsverhältnis der synergistischen Zusammensetzung in vergleichsweise engen Grenzen bei der Herstellung eingehalten werden und bei der Lagerung erhalten bleiben.

Die Herstellung von granulierten Düngern auf Harnstoffbasis, die unter E insatz konzentrierter Lösungen, Harnstoffschmelze oder Schmelzesuspension erfolgt, führt bei Einsatz von 1,2,4-Triazol neben dem Dicyandiamid erwartungsgemäß zu Sublimationsverlusten des 1,2,4-Triazols. Daraus ergibt sich die Notwendigkeit, aufwändige Rückhaltevorrichtungen für Triazolanteile in der Abluft der Granulieranlage zu installieren. Des Weiteren wurde festgestellt, dass bei der offenen Lagerung der Dicyandiamid und 1,2,4-Triazol enthaltenden Düngergranalien über längere Zeiträume auch schon bei Raumtemperatur Triazolverluste durch Sublimation auftreten, denen entgegenzuwirken ist.

Der vorliegenden Erfindung lag daher die Aufgabe zugrunde, Verfahren zur Herstellung von Dicyandiamid und 1,2,4-Triazol als Nitrifikationsinhibitor enthaltende Düngemittelgranulate auf Harnstoffbasis zu entwickeln, welche die genannten Nachteile der Sublimation des 1,2,4-Triazols durch verbesserte Retention bei der Düngemittelgranulation und offenen Lagerung nicht mehr aufweisen. Diese Aufgabe wird erfindungsgemäß durch das in Anspruch 1 definierte Verfahren und die in Anspruch 10 angegebene Verwendung gelöst. Vorteilhafte und/oder bevorzugte Ausführungsformen des erfindungsgemäßen Verfahrens sowie der erfindungsgemäß angegebenen Verwendung sind Gegenstand der Unteransprüche.

Beispielsweise kann 1,2,4-Triazol entweder als Gemisch mit seine Sublimation hemmenden Verbindungen nach Anspruch 1, auf die Granalienoberfläche des bereits Dicyandiamid enthaltenden harnstoffhaltigen Düngemittels aufgebracht oder in Gegenwart von die 1,2,4-Triazol Sublimation hemmenden Verbindungen nach Anspruch 1 mit Dicyandiamid enthaltender Düngerschmelze oder -schmelzesuspension granuliert werden.

Überraschend wurde gefunden, dass wasserlöslicher Polyvinylalkohol, Polyethylenimin oder auch Harnstoff-Formaldehyd-Vorkondensate sowie in einer speziellen Verfahrensvariante auch Aluminiumsulfat-Hydrate im Zusammenwirken mit dem Harnstoff geeignet sind, die 1,2,4-Triazol-Sublimation zu unterdrücken. In die wässrigen Polymerlösungen, wobei auch Gemische der genannten Polymeren eingesetzt werden können, wird 1,2,4-Triazol eingelöst. Nach Abdampfen des Wasseranteils bleibt das 1,2,4-Triazol mit dem Polymer fest auf der Granalienoberfläche haften und die sonst übliche Sublimation des 1,2,4-Triazols bleibt aus. Zur besseren Verteilung auf den Granalien können den wässrigen Polymerlösungen zweckmäßigerweise noch nicht-ionogene oberflächenaktive Verbindungen zugesetzt werden.

Aus den Untersuchungen mit einer Reihe weiterer Polymersubstanzen, die als Coatingmaterial für Düngergranalien bekannt sind, wie beispielsweise Polyurethane, Polyharnstoffe, Polyethylen, substituierte Cellulosederivate und Paraffine, ergab sich, dass diese Verbindungen nicht geeignet sind, Triazol auf die Granalienoberfläche aufzubringen und so zu fixieren, dass weder Abriebs- noch Sublimationsverluste auftreten. Das hat seinen Grund in der zumeist fehlenden Löslichkeit des Triazols in den wasserunlöslichen Polymerverbindungen. In einer Reihe von Fällen, insbesondere in den in-situ hergestellten Polymercoating-Hüllen aus den Monomeren, wie beispielsweise den Polyurethanen und Polyharnstoffen, wird das zugesetzte Triazol durch Einbringung in die Polymerstruktur so fest gebunden, dass die nitrifikationshemmende Wirkung verloren geht.

Beim Lösen des Triazols in der wässrigen Polymerlösung ist darauf zu achten, dass sich die gesamte Menge rückstandsfrei löst und eine im Triazol- und Wassergehalt genau bestimmte Lösung der Polymerverbindung für eine exakte Dosierung der Zugabemenge zu den Dicyandiamid-haltigen Harnstoffgranalien vorliegt. Die auf die Granalien aufgebrachte Lösung erfüllt zwei Funktionen: Sie dient zum einen der Dosierung und Anhaftung des Triazols auf den Granalien, zum anderen wirkt die nach der Granalientrocknung sich ausbildende Polymerschicht auf der Granalienoberfläche als Antibackmittel.

Für die nitrifikationshemmende Wirkung in der Kombination Dicyandiamid/1,2,4-Triazol ist die Einhaltung eines bestimmten, durch experimentelle Untersuchungen festgelegten Bereiches im Gewichtsverhältnis beider Komponenten einzuhalten. Das Gewichtsverhältnis Dicyandiamid zu 1,2,4,-Triazol muss sich in den Grenzen 13 : 1 bis 7 : 1, optimal 10 : 1, bewegen, um den synergistischen Effekt der Kombination voll wirksam werden zu lassen.

Gemäß einer bevorzugten Ausführungsform für einen mit Nitrifikationshemmer versetzten Harnstoffdünger werden der Harnstoffschmelze unter turbulenter Vermischung zur Herstellung der Dicyandiamid enthaltenden Harnstoffgranalien 0,9 bis 1,1 Gew.-%, bevorzugt 1,0 Gew.-%, Dicyandiamid, bezogen auf das Gewicht der Harnstoffschmelze, zugesetzt. Die Harnstoffschmelze sollte dabei weniger als 0,5 Gew.-% Wasser und weniger als 0,5 Gew.-% Biuret e nthalten. Das zugesetzte Dicyandiamid löst sich in der 135 bis 145 °C heißen turbulent in Bewegung gehaltenen Harnstoffschmelze rasch auf, so dass Verweilzeiten zwischen 10 bis 120 Sekunden einzuhalten sind, bis die Dicyandiamid-haltige Harnstoffschmelze über Einstoffdüsen in das Wirbelbett mit einer mittleren Tropfengröße von 250 bis 500 µm auf bereits vorgebildete feinteilige Dicyandiamid-enthaltende Harnstoffgranalien aufgesprüht wird und bei 70 bis 90 °C der Granalienaufbau erfolgt. Nach dem Austrag der Granalien aus dem Wirbelbettgranulator und der Abtrennung der Nennkornfraktion wird diese in einer Mischtrommel bei 30 bis 40 °C mit der eingestellten Menge der Triazol-haltigen wässrigen Polymerlösung behandelt.

Als wässrige Polymerlösung wird entweder eine ca. 20 gew.-%ige wässrige Polyvinylalkohol-Lösung (Molmasse des Polyvinylalkohols 10.000 bis 90.000, bevorzugt 20.000 bis 50.000), eine ca. 70 gew.-%ige wässrige, gegebenenfalls mit Ammoniakzusatz stabilisierte Harnstoff-Formaldehyd-Vorkondensat-Lösung oder Gemische beider Polymerlösungen eingesetzt. Das Harnstoff-Formaldehyd-Vorkondensat wird in üblicher Weise aus den Komponenten im Molverhältnis 1 : 1 hergestellt und mit 0,8 mol Ammoniak stabilisiert. Wenn Mischungen beider Polymerlösungen eingesetzt werden, dann sind diese im Gewichtsverhältnis 95 : 5 bis 80 : 20, vorzugsweise 90 : 10 bis 85 : 15 (Polyvinylalkohol-Lösung : Harnstoff-Formaldehyd-Vorkondensat-Lösung) zu mischen, ehe das Triazol darin gelöst wird. In die wässrige Polymerlösung - gleichgültig ob diese nur Polyvinylalkohol, Harnstoff-Formaldehyd-Vorkondensat oder Gemische beider enthält - wird 1,2,4-Triazol bei Raumtemperatur bis zum Erreichen einer 35 gew.-%igen Lösung zugegeben. Diese Lösung wird ebenfalls bei Raumtemperatur mengenbezogen auf die aus dem Wirbelbettgranulator kommende Nennkorn-Fraktion der Dicyandiamid-haltigen Harnstoffgranalien aufgesprüht. Dabei wird die Dosierung so eingestellt, dass 0,05 bis 0,20 Gew.-%, vorzugsweise 0,085 bis 0,15 Gew.-%, besonders bevorzugt 0,10 bis 0,11 Gew.-%, Triazol auf die Granalien aufgetragen werden. Das entspricht dann der Zugabemenge von 0,24 bis 0,43 Gew.-%, bevorzugt 0,29 bis 0,31 Gew.-%, der Triazol-haltigen Polymerlösung bezogen auf die zugeführte Granalienmenge. Mit dieser Dosierung wird das zur optimalen nitrifikationshemmenden Wirkung synergistisch wirkende Gewichtsverhältnis der Wirkstoffkomponenten Dicyandiamid und Triazol eingehalten. Zur Absenkung des Wassergehaltes der Granalien auf kleiner 0,12 Gew.-% vor der Einlagerung ist eine schonende Trocknung mit maximal 80 °C heißer Luft nachgeschaltet.

Bei Einsatz von Harnstoff-Ammonsulfat-Mischdüngern, wobei das Hamstoff-Ammonsulfat-Gewichtsverhältnis variieren kann, wird der Gehalt an Nitrifikationshemmer auf den Stickstoffgehalt des Mischdüngers eingestellt. Die Zugabemenge wird zweckmäßigerweise so bemessen, dass bei einem eingestellten Gewichtsverhältnis Dicyandiamid/1,2,4-Triazol von 10 : 1 der Nitrifikationsinhibitoranteil im Dünger, bezogen auf den N-Gehalt, zwischen 2,0 bis 2,5 Gew.-% beträgt. Bei der Verfahrensvariante der Oberflächenaufbringung des 1,2,4-Triazols auf die das Dicyandiamid enthaltenden Granalien des Harnstoff-Ammonsulfat-Mischdüngers wird in gleicher Weise wie beim Harnstoffdünger in wässrigem Polyvinylalkohol gelöstes 1,2,4-Triazol aufgetragen, danach werden die Granalien getrocknet und wegen der erhöhten Hygroskopizität des Mischdüngers zweckmäßigerweise noch mit einem paraffinischen Hydrophobierungsmittel nachbehandelt.

Es wurde ebenfalls überraschend gefunden, dass bestimmte, der Harnstoffschmelze oder -schmelzesuspension zugesetzte Granulierzusatzstoffe die Sublimation von in der Harnstoffschmelze gelöstem 1,2,4-Triazol absenken. In diesem Sinne wirken HarnstoffFormaldehyd-Vorkondensate bei Ammonsulfat-freien Düngerkombinationen und Aluminiumsulfat-Hydrate mit mehr als 6 Kristallwasser im Molekül bei Harnstoff und Harnstoff-Mischdüngern. Die Kombination beider Granulierzusätze ist nicht möglich, da Harnstoff-Formaldehyd-Vorkondensat unter der Wirkung von Aluminiumsulfat-Hydraten unkontrolliert kondensiert.

In einer bevorzugten Ausführungsform für mit Nitrifikationshemmer versetztem Harnstoff werden der H arnstoffschmelze, d ie 0,5 b is 1,0 Gew.-% eines 80g ew.-%igen Harnstoff-Formaldehyd-Vorkondensates gelöst enthält, 0,9 bis 1,1 Gew.-%, vorzugsweise 1,0 Gew.-%, Dicyandiamid und 0,085 bis 0,15 Gew.-%, vorzugsweise 0,10 bis 0,11 Gew.-%, 1,2,4-Triazol bei 135 bis 145 °C unter turbulenter Vermischung zugesetzt. Beide Komponenten lösen sich in der Harnstoffschmelze sehr rasch, so dass die Verweilzeit bis zur Granulation sehr kurz gehalten werden kann.

Wird Triazol zum Granulierzusatz Harnstoff-Formaldehyd-Vorkondensat direkt vor dessen Zumischung zur Harnstoffschmelze zugegeben, besteht die Gefahr einer Fixierung des Triazols als 1,2,4-Triazol-1-ylmethylharnstoff. In dieser Verbindung zeigt das 1,2,4-Triazol keine nitrifikationshemmende Wirkung, was somit einer Inaktivierung des zugesetzten Triazols gleichkommt. Im Falle der Zugabe des 1,2,4-Triazols zur Harnstoffschmelze mit dem Granulierhilfsmittel Harnstoff-Formaldehyd-Kondensat unterbleibt aufgrund der hohen Verdünnung der beiden reaktiven Komponenten die störende Triazol-Inaktivierungsreaktion.

Die bevorzugte Ausführungsform zum Einsatz des Aluminiumsulfat-Hydrates, beispielsweise Al₂(SO₄)₃ • 14 H₂O, geht davon aus, dass das 1,2,4-Triazol dem Aluminiumsulfat-Hydrat bereits vor der Zugabe zur Harnstoffschmelze zugesetzt, dabei aber die Verweilzeit bis zum Eintrag in die Harnstoffschmelze kurzgehalten wird. In die Harnstoffschmelze wird ein Gemisch aus 0,085 bis 0,15 Gew.-%, vorzugsweise 0,10 bis 0,11 Gew.-%, 1,2,4-Triazol und 0,5 bis 1,5 Gew.-%, vorzugsweise 0,7 bis 1,0 Gew.-%, Al₂(SO₄)₃ • 14 H₂O eingetragen. Die Harnstoffschmelze kann dabei die 0,9 bis 1,1 Gew.-%, bevorzugt 1,0 Gew.-%, Dicyandiamid als weitere Nitrifikationshemmerkomponente bereits gelöst enthalten. Die spätere Zugabe des Dicyandiamids nach Einarbeitung des Triazol-Aluminiumsulfat-Hydrat-Gemisches unter Beibehaltung der genannten Zusatzmengen ist gleichermaßen möglich.

In einer speziellen Ausführungsform wird Aluminiumsulfat-Hydrat mit einer Teilmenge des Harnstoffs im Molverhältnis 20 bis 35 : 1 unter Rühren über einen Zeitraum von 10 bis 30 Minuten bei 130 bis 150 °C , vorzugsweise 140 °C, umgesetzt. Dabei verdampft die Hauptmenge an freigesetztem Hydratwasser aus der mit Al-Sulfat angereicherten Hamstoffschmelze, was für die Einhaltung niedriger Restwassergehalte im weiterverarbeiteten Harnstoff von Vorteil ist. Dabei geht ein Anteil des Al-Sulfats in wasserunlösliche Aluminiumverbindungen über, was wichtig ist für die erhöhte Festigkeit der resultierenden Granalien. Gegen Ende der Vorreaktion ("Vorschmelze") zwischen Harnstoff und Aluminiumsulfat-Hydrat wird 1,2,4-Triazol zugegeben. Die Zusatzmenge an 1,2,4-Triazol ergibt sich aus dem Zumischungsverhältnis der Vorschmelze zur Hauptmenge der bereits Dicyandiamid-haltigen Harnstoffschmelze vor der Granulation bei Zugrundelegung des Dicyandia-mid-Triazol-Gewichtsverhältnisses von 10 : 1. Wenn beispielsweise 1 Teil der Aluminiumsulfat-Triazol-haltigen Harnstoff-Vorschmelze mit 10 Teilen Harnstoff-Dicyandiamid-Schmelze mit 1 Gew.-% Dicyandiamid-Gehalt vermischt wird, muss 1 Gew.-% Triazol in der Vorschmelze enthalten sein, um den im Endprodukt gewünschten Gehalt an Nitrifikationsinhibitor zu gewährleisten.

Die Granulation der mit den Granulierzusätzen versehenen Schmelzen erfolgt in analoger Weise wie bei der Herstellung der nur das Dicyandiamid enthaltenden Harnstoffgranalien. Unter dem Einfluss der Granulierhilfsmittel sind jedoch herabgesetzte Temperaturen in der Wirbelschicht zum Granalienaufbau haltbar, was zusätzlich zur Triazol-fixierenden Wirkung der genannten Zusätze begünstigt auf den Sublimationsdruck beim Triazol wirkt. Die Nennkornfraktion des Granulates wird mit 0,20 bis 0,25 Gew.-% eines Antibackmittels behandelt. Der Einsatz von Triazol-bindenden Mitteln als Antibackmittel, wie die bereits genannten wässrigen Polymerlösungen, gibt zusätzliche Sicherheit vor unerwünschten Sublimationsverlusten des im Produkt enthaltenen Triazols bei offener Lagerung der Düngergranalien.

Bei Einsatz von Harnstoff-Ammonsulfat-Schmelzesuspension sind AluminiumsulfatHydrate in analoger Weise wie bei Harnstoff zur Vermeidung der 1,2,4-Triazol-Sublimation während der Granulation des Mischdüngers einsetzbar.

In der bevorzugten Ausführungsform für einen mit Nitrifikationsinhibitor versehenen Harnstoff-Ammonsulfat-Mischdünger mit gleichen Gewichtsanteilen beider Düngekomponenten wird das Triazol dem Aluminiumsulfat-Hydrat vor dessen Zugabe zur Dicyandiamid-haltigen Harnstoff-Ammonsulfat-Schmelzesuspension zugesetzt, wobei die Verweilzeit der Triazol/Aluminiumsulfat-Hydrat-Mischung bis zur Zugabe zur Schmelzesuspension kurz gehalten wird. Dicyandiamid ist in der Schmelzesuspension in einer Konzentration von 0,5 bis 0,9 Gew.-%, vorzugsweise 0,60 bis 0,70 Gew.-%, enthalten. Triazol und Al₂(SO₄)₃ • 14 H₂O werden so miteinander vermischt, dass in der Schmelzesuspension vor der Granulation 0,05 - 0,09 Gew.-%, vorzugsweise 0,06 bis 0,07 Gew.-%, Triazol und 0,5 bis 1,5 Gew.-%, vorzugsweise 0,7 bis 0,9 Gew.-%, Al₂(SO₄)₃ • 14 H₂O enthalten sind. Die mit diesen Zusätzen versehenen Granalien des Nennkombereiches werden mit 0,15 bis 0,30 Gew.-%, bevorzugt 0,20 bis 0,25 Gew.-%, eines paraffinischen hydrophobierend wirksamen Konditionierungsmittels behandelt.

Nachstehend wird die Erfindung durch Beispiele beschrieben.

### Beispiele

### Beispiel 1

### Granulation von Dicyandiamid und Triazol enthaltender Harnstoffschmelze ohn e weitere Zusätze

1. In einer kleintechnischen Wirbelschichtgranulationsanlage wurde Harnstoffschmelze, in der 1,0 Gew.-% Dicyandiamid (DCD) und 0,12 Gew.-% Triazol (TZ) gelöst enthalten waren, unter Einsatz einer Einstoffdüse (VKD 0,29) granuliert. Die Anlage arbeitet mit einem Sprühdruck von 1,5 bar bei einer Wirbelluftgeschwindigkeit von 10 m/s. Die Schmelzetemperatur betrug 140 °C, die Wirbellufttemperatur wurde bei 40 ° C gehalten. Auf 300 g Basisgranulat wurden 1,2 kg der Schmelze aufgesprüht.
Aus drei Parallelversuchen zur Ermittlung der Wiederfindungsraten des Dicyandiamid und Triazols bei der Wirbelschichtgranulation ohne weitere Zusätze wurden folgende Werte ermittelt.

| **Versuch** | **DCD-Gehalt (Gew.-%)** | **TZ**-**Gehalt (Gew.-%)** | **Wiederfindung (Gew.-%)** | |
|---|---|---|---|---|
| | | | **DCD** | **TZ** |
| 1 | 0,95 | 0,09 | 95 | 75 |
| 2 | 0,96 | 0,10 | 96 | 83 |
| 3 | 1,00 | 0,08 | 100 | 67 |

Triazol zeigt unter den genannten Bedingungen der Wirbelschichtgranulation der Harnstoffschmelze Sublimationsverluste.
2. Die Laborergebnisse zur Granulation von Dicyandiamid- und Triazol-haltiger Harnstoffschmelze bezüglich der Wiederfindung der zugesetzten Nitrifikationsinhibitorkomponenten wurden in einem Produktionsversuch überprüft. Die Produktion sanlage zur Wirbelschichtgranulation arbeitet ebenfalls mit Einstoffdüsen für die Schmelzezuführung in die Wirbelschicht.

Die Versuchsbedingungen waren:
- Schmelzetemperatur: <140 °C
- Durchsatz an Schmelze: ca. 20 t/h
- Sprudellufttemperatur: <30 °C
- Wirbellufteingangstemperatur: <15 °C
- Granulatorablufttemperatur: <75 °C
- Dicyandiamid-Dosierung: 185 kg/h (= 0,925 Gew.-% DCD)
- Triazol-Dosierung: 21,6 kg/h (= 0,108 Gew.-% TZ)

Im Durchschnitt der gesamten Produktionscharge wurden 0,9 Gew.-% DCD und 0,08 Gew.-% TZ in den Harnstoffgranalien wiedergefunden. Damit bestätigte sich im Produktionsversuch das Ergebnis der kleintechnischen Wirbelschichtgranulation im Hinblick auf die Dicyandiamid- und Triazol-Wiederfindungsraten.

### Beispiel 2

### Granulation von Dicyandiamid und Triazol enthaltender Harnstoff-Ammonsulfat-Schmelzesuspension ohne weitere Zusätze

In der Produktionsanlage zur Herstellung von Harnstoff-Ammonsulfat-Mischdünger bei einem Mischungsverhältnis von ca. 50 : 50 wurde versuchsweise das Nitrifikationsinhibitor-Gemisch Dicyandiamid/Triazol im Gewichtsverhältnis 10 : 1 vor der Wirbelschichtgranulation der Schmelzesuspension zugesetzt.

Die Versuchsbedingungen waren folgende:
- Temperatur der Schmelzesuspension: 139 °C
- Durchsatz: 20 t/h
- Sprudellufttemperatur: 70 °C
- Granulierhilfsmittel: 0,9 Gew.-% Al₂(SO₄)₃ • 14H₂O
- Dicyandiamid-Dosierung: 140 kg/h (= 0,7 Gew.-% DCD)
- Triazol-Dosierung: 18 kg/h (= 0,09 Gew.-% TZ)

Im Durchschnitt der gesamten Produktionscharge wurde das Dicyandiamid mit 0,68 Gew.-% nahezu vollständig wiedergefunden, Triazol mit 0,07 Gew.-% in den Granalien zeigte hingegen eine Wiederfindung von nur ca. 78 Gew.-%. Die Restmengen an Triazol waren Sublimationsverluste im Wirbelluftstrom.

### Beispiel 3

### Oberflächenaufbringung von Triazol auf Dicyandiamid enthaltende Harnstoffgranalien

### 1. Mittels wässriger 25 gew-%iger Polyvinylalkohol-Lösung

a) Ausgangsprodukt waren in der kleintechnischen Wirbelschichtgranulationsanlage hergestellte 1,0 Gew.-% Dicyandiamid enthaltende H arnstoffgranalien. Die T riazolkomponente wurde mittels wässriger 25 gew.-%iger Polyvinylalkohol-Lösung, in die 35 Gew.-% Triazol eingelöst worden waren, oberflächig auf die Granalien aufgebracht. 500 g Dicyandiamid-haltige Harnstoffgranalien wurden bei Raumtemperatur auf einem rotierenden schräg gestellten Labortellergranulator mit ca. 2 g der 35 gew.-%igen Triazol-Lösung in wässrigem Polyvinylalkohol unter Feinzerstäubung mittels einer Sprühpistole behandelt. Zur besseren Verteilung der Lösung auf den Granalienoberflächen war dieser ein Tensidzusatz beigefügt. Die aufgebrachte Menge an Lösung wurde mittels Differenzwägung bestimmt. Unmittelbar nach der Oberflächenbehandlung wurden die Granalien noch auf dem rotierenden Teller mit heißer Luft (Fön) getrocknet. Die getrockneten Granalien enthielten im Mittel 0,1 Gew.-% Triazol neben den eingeschmolzenen 1,0 Gew.-% Dicyandiamid.
b) In einem Produktionsversuch wurden 0,93 Gew.-% Dicyandiamidenthaltende Harnstoffgranalien direkt nach Verlassen der Wirbelgranulationsanlage bei einem Durchsatz von 2 0 t/h in der nachgeschalteten Konditionierungstrommel mit 61,6 kg/h einer 3 5 gew.-%igen Triazol-Lösung in wässrigem Polyvinylalkohol (Feststoffgehalt ca. 25 Gew.-%) behandelt. Anschließend gelangten die Granalien zur Trocknung, wo der Wassergehalt mit ca. 80 °C heißer Luft auf <0,15 Gew.-% abgesenkt wurde. Die Granalien enthielten 0,91 Gew.-% Dicyandiamid und 0,1 Gew.-% Triazol.

### 2. Mittels wässrigen Harnstoff-Formaldehyd-Kondensates

Ausgangsprodukt waren auch hier mit 0,98 Gew.-% Dicyandiamid versetzte Harnstoffgranalien, auf deren Oberfläche Triazol aufzubringen war. Das Harnstoff-Formaldehyd-Vorkon-densat wurde durch Umsetzung der Komponenten Harnstoff und Formaldehyd im Molverhältnis 1 : 1 in üblicher Weise hergestellt, mit 0,8 Mol Ammoniak stabilisiert und auf einen Feststoffgehalt von ca. 70 Gew.-% gebracht. In diese wässrige Lösung wurde Triazol bis zum Erreichen einer 35 gew.-%igen Lösung zugegeben.

In analoger Weise wie unter 1 a) in diesem Beispiel beschrieben ist, wurden 500 g der Dicyandiamid-haltigen Harnstoffgranalien auf einem Labortellergranulator mit 2 g der Triazol-Lösung im Harnstoff-Formaldehyd-Vorkondensat mittels einer Sprühpistole behandelt und nach der Triazolaufbringung mit heißer Luft getrocknet. Die nach der Trocknung erhaltenen Granalien enthielten gemittelt 0,95 Gew.-% Dicyandiamid und 0,12 Gew.-% Triazol.

### 3. Mittels Gemischen der wässrigen Lösungen von Polyvinylalkohol und Harnstoff-Formaldehyd-Vorkondensat

8 g wässriger Polyvinylalkohollösung mit Tensidzusatz wurden mit 2 g ca. 70 gew.-%iger Harnstoff-Formaldehyd-Vorkondensat-Lösung gemischt und darin 3,5 g Triazol gelöst. In der zuvor beschriebenen Weise wurden 500 g Dicyandiamid-haltige Harnstoffgranalien (1,0 Gew.-% Dicyandiamid) mit 2 g der Mischlösung aus Polyvinylalkohol und Harnstoff-Formaldehyd-Vorkondensat mit eingelöstem Triazol besprüht und anschließend getrocknet. Die nach der Trocknung erhaltenen Granalien enthielten im Mittel 0,98 Gew.-% Dicyandiamid und 0,10 Gew.-% Triazol.

### Beispiel 4

### Oberflächenaufbringung von Triazol auf Dicyandiamid enthaltende Harnstoff-Ammonsulfat-Granalien

a) Auf Harnstoff-Ammonsulfat-Mischgranulat mit 0,69 Gew.-% Dicyandiamid-Gehalt wurde Triazol, gelöst in wässrigem Polyvinylalkohol, oberflächig aufgebracht. In die 25 gew.-%ige Polyvinylalkohol-Lösung, die noch einen Zusatz an Tensid enthielt, waren 20 Gew.-% Triazol eingelöst. Auf 500 g der Dicyandiamid enthaltenden Harnstoff-Ammonsulfat-Mischgranalien wurden bei Raumtemperatur auf einem rotierenden, schräg gestellten Labortellergranulator 1,9 g der 20 gew.-%igen Triazol-Lösung in wässrigem Polyvinylalkohol unter Feinzerstäubung mittels einer Sprühpistole aufgetragen. Die aufgebrachte Menge wurde mittels Differenzwägung bestimmt. Unmittelbar nach der Oberflächenbehandlung, die durch Anfärbung der Lösung in ihrer Wirkung kontrolliert wurde, erfolgte noch auf dem rotierenden Teller eine Trocknung mit heißer Luft (Fön). Die getrockneten Granalien enthielten im Mittel 0,69 Gew.-% Dicyandiamid und 0,071 Gew.-% Triazol.
b) In einem Produktionsversuch wurden Harnstoff-Ammonsulfat-Mischgranalien mit 0,65 Gew.-% Dicyandiamid-Gehalt direkt nach Verlassen der Wirbelschichtgranulations-anlage bei einem Durchsatz von 20 t/h in der nachgeschalteten Mischtrommel mit 56 kg/h einer 25 gew.-%igen Triazol-Lösung in wässrigem Polyvinylalkohol (Feststoffgehalt ca. 25 Gew.-%) behandelt. Anschließend gelangten die Granalien zur Trocknung, wo der Wassergehalt mit ca. 80 °C heißer Luft auf <0,15 Gew.-% abgesenkt wurde. In üblicher Weise wurde danach das Granulat mit 0,20 - 0,25 Gew.-% paraffinischem Hydrophobierungsmittel behandelt. Das N-stabilisierte Harnstoff-Ammonsulfat-Mischgranulat enthielt im Mittel der Proben 0,63 Gew.-% Dicyandiamid und 0,070 Gew.-% Triazol.

### Beispiel 5

### Granulation von Dicyandiamid und Triazol enthaltender Harnstoffschmelze mit Zusätzen

### 1. Zusatz von Harnstoff-Formaldehyd-Kondensat

Im kleintechnischen Wirbelschichtgranulator wurde Harnstoffschmelze, die 0,6 Gew.-% Harnstoff-Formaldehyd-Vorkondensat (85 Gew.-% Feststoffanteil), 1,0 Gew.-% Dicyandiamid und 0,1 Gew.-% Triazol - jeweils bezogen auf die Harnstoffmenge - enthält, granuliert. Das Harnstoff-Formaldehyd-Vorkondensat war, wie in allen Beispielen, ausden Komponenten Harnstoff, Formaldehyd und Ammoniak im Molverhältnis 1 : 1 : 0,8 hergestellt worden. Die Wiederfindung des Dicyandiamid und Triazols in den resultierenden Granalien lag in vier Versuchen bei jeweils 96 - 100 Gew.-%, womit die sublimationsunterdrückende Wirkung beim Triazol deutlich wird, beispielsweise zu den Wiederfindungsraten im Beispiel 1.

### 2. Zusatz von Al₂(SO₄)₃ • 14 H₂O

a) In einer Vorreaktion wurden 13 g Harnstoff und 4,8 g Al₂(SO₄)₃ • 14 H₂O 10 Minuten bei 140 °C unter Rühren gemeinsam geschmolzen, danach 1,6 g Triazol der Schmelze zugesetzt und weitere 5 Minuten bei 135 -140 °C belassen. Nach Ablauf dieser Vorreaktion wurde das schmelzflüssige Gemisch in 1000 g Harnstoffschmelze, die 1 Gew.-% Dicyandiamid enthielt, verrührt und dem kleintechnischen Wirbelschichtgranulator zugeführt. Die resultierenden Granalien enthielten neben den 0,48 Gew.-% Al₂(SO₄)₃ 0,98 Gew.-% Dicyandiamid und 0,09 Gew.-% Triazol.
b) Im technischen Versuch wurden in 711 kg/h Harnstoffschmelze unter Rühren 289 kg/h Al₂(SO₄)₃ • 14 H₂O kontinuierlich eingetragen und die Schmelze dabei 15 Minuten lang bei 135 - 140 °C gehalten. Die entstandenen Brüden über der Schmelze wurden abgesaugt. Nach den 15 Minuten werden 210 kg/h Dicyandiamid und 21 kg/h Triazol zugesetzt und weitere 5 Minuten bei 135 °C gerührt. Danach wird diese Vorschmelze zu 21 t/h Harnstoffschmelze vor deren Granulation zudosiert, um ein Granulat mit 1,0 Gew.-% Dicyandiamid und 0,1 Gew.-% Triazol zu erhalten, was durch Analysenwerte bestätigt wurde.

### Beispiel 6

### Granulation von Dicyandiamid und Triazol enthaltender Harnstoff-Ammonsulfat-Schmelzesuspension

Der Granulierzusatzstoff Al₂(SO₄)₃ • 14 H₂O und Triazol werden vor der Zugabe zur Harnstoff-Ammonsulfat-Schmelzesuspension im Gewichtsverhältnis 13 : 1 vermischt. Bezogen auf die Schmelzesuspension werden 0,9 Gew.-% Al₂(SO₄)₃ • 14 H₂O und 0,07 Gew.-% Triazol eingesetzt. Dieses Reaktionsgemisch wird der Schmelzesuspension unter Rühren zugemischt, wobei 0,7 Gew.-% Dicyandiamid bereits in der Schmelzesuspension enthalten sind.

Im Produktionsversuch mit 20 t/h Durchsatz wurden 180 kg/h Al₂(SO₄)₃ • 14 H₂O mit 14 kg/h Triazol vermischt und anschließend in die Schmelzesuspension unter starkem Rühren eingebracht. Zuvor waren der Schmelzesuspension aus Harnstoff-Ammonsulfat im Verhältnis 50 : 50 bereits 140 kg/h Dicyandiamid zugesetzt worden. Die resultierenden Granalien wurden anschließend in einer Mischtrommel mit 0,20 - 0,25 Gew.-% eines paraffinischen Hydrophobierungsmittels behandelt. Die Analysenwerte der gemittelten Proben zeigte 0,7 Gew.-% Dicyandiamid und 0,069 Gew.-% Triazol.

### Beispiel 7

### Sublimationstest von Triazol

Die Unterdrückung der Sublimation des Triazols bei der Herstellung der Dicyandiamid und Triazol enthaltenden Harnstoffgranalien wird über die Wiederfindungsraten des zugesetzten Triazols deutlich. Die Unterdrückung der Triazol-Sublimation während der offenen Lagerung der Triazol-haltigen Harnstoffgranalien durch die Zusatzstoffe wurde in einem zeitraffenden Schnelltest und durch Lagerversuche von größeren Chargen im Düngerlager überprüft.

### 1. Laborschnelltest

Je 50 g der nach den Beispielen 3 bis 6 hergestellten Harnstoffgranalien bzw. Harnstoff-Ammonsulfat-Mischgranalien mit oberflächig aufgebrachtem und in die Granalien eingearbeitetem Triazol neben dem jeweils eingearbeiteten Dicyandiamid wurden in einem geschlossenen Gefäß bei 40 °C über 8 Stunden einem Luftstrom von ca. 5 1/h ausgesetzt. Die das Gefäß mit der Probe verlassende Luft wurde durch eine Waschflasche mit 10 gew.-%iger Phosphorsäure geleitet, um eventuell sublimiertes Triazol zu absorbieren. Jeweils 3 Parallelproben wurden durchgeführt und ausgewertet. In keinem Falle war in der Absorptionslösung Triazol nachweisbar.

### 2. Triazolgehalte nach der Lagerung im Düngemittellager

In Versuchshaufwerken mit Lagermengen zwischen 50 t und 450 t wurde der Gehalt an Dicyandiamid und Triazol im granulierten Harnstoff in verschiedenen Haufwerkstiefen und mit zunehmender Lagerdauer aus entnommenen Proben analytisch bestimmt.

Triazolgehalt von Harnstoffgranalien (Dicyandiamid eingranuliert, Triazol oberflächig)
a) Formulierungsmittel: wässriger Polyvinylalkohol + Tensid

| **Probenahme** | **Start-Gehalt (Gew.-%)** | **Gehalt nach 21 d (Gew.-%)** |
|---|---|---|
| Oberfläche | 0,10 | 0,09 |
| 5 cm Tiefe | | 0,10 |
| 50 cm Tiefe | | 0,10 |

b) Formulierungsmittel: wässriges Harnstoff-Formaldehyd-Vorkondensat

| **Probenahme** | **Start-Gehalt (Gew.-%)** | **Gehalt nach 23 d (Gew.-%)** |
|---|---|---|
| Oberfläche | 0,09 | 0,07 |
| 5 cm Tiefe | | 0,08 |
| 50 cm Tiefe | | 0,09 |

Triazolgehalt von Harnstoffgranalien (Dicyandiamid + Triazol eingranuliert unter Zusatz von Al₂(SO₄)₃ • 14 H₂O), Antibackmittel-Zusatz: 0,20 Gew.-% wässriger Polyvinylalkohol + Tensid, Heißlufttrocknung

| **Probenahme** | **Start-Gehalt (Gew.-%)** | **Gehalt nach 21 d (Gew.-%)** |
|---|---|---|
| Oberfläche | 0,11 | 0,09 |
| 5 cm Tiefe | | 0,10 |
| 50 cm Tiefe | | 0,11 |

In zwei Versuchshaufwerken mit ca. 50 t Produkt wurde der Gehalt an Triazol (neben Dicyandiamid) im gelagerten Harnstoff-Ammonsulfat-Mischdünger in verschiedenen Hauf-werkstiefen und mit zunehmender Lagerdauer aus entnommenen Proben analytisch ermittelt.

Triazolgehalt von Harnstoff-Ammonsulfat-Mischgranalien (Dicyandiamid eingranuliert, Triazol oberflächig)

| **Probenahme** | **Start-Gehalt (Gew.-%)** | **Gehalt nach 42 d (Gew.-%)** |
|---|---|---|
| 5 cm Tiefe | 0,065 | 0,060 |
| 25 cm Tiefe | | 0,062 |
| 50 cm Tiefe | | 0,060 |

Triazolgehalt von Harnstoff-Ammonsulfat-Mischgranalien (Dicyandiamid und Triazol mit Al₂(SO₄)₃ • 14 H₂O eingranuliert)

| **Probenahme** | **Start-Gehalt (Gew.-%)** | **Gehalt nach 42 d (Gew.-%)** |
|---|---|---|
| 5 cm Tiefe | 0,069 | 0,061 |
| 25 cm Tiefe | | 0,060 |
| 50 cm Tiefe | | 0,068 |

### Beispiel 8

### Backtest

Ohne vorbeugende Maßnahmen erhöhen Zusätze wie Dicyandiamid und Triazol in den Harnstoffgranalien oder auf deren Oberfläche die Verbackungsneigung bei der Lagerung. Daher muss bei der Herstellung von Dicyandiamid- und Triazol-haltigen DüngerGranalien auf Harnstoffbasis neben der Unterdrückung der Triazolsublimation ein ausreichender Schutz gegen Verbackung der Granalien bei der offenen Lagerung gesichert sein. Der vergleichende Backtest im Labor gibt Aufschluss über die Verbackungsneigung der untersuchten Düngemittelformulierung.

Im Backtest werden 50 g Probemenge 24 Stunden einem Druck von 6 bar in einer genormten zylindrischen Form ausgesetzt. Anschließend wird beim entnommenen Formkörper die Kraft in N gemessen, die nötig ist, um den Probekörper zu zerstören. Hohe Kraftaufwen-dungen lassen auf eine hohe Verbackungsneigung schließen.

Im Vergleich ergaben sich aus 10 Messungen folgende Backtestwerte:

| **Lfd. Nr.** | **Produkt** | **Kraftaufwand (N)** |
|---|---|---|
| 1 | Harnstoff granuliert ohne Zusätze | 30-50 |
| 2 | Harnstoff+ 5 Gew.-% Dicyandiamid eingeschmolzen | 95 - 115 |
| 3 | Harnstoff + 1 Gew.-% Dicyandiamid eingeschmolzen + 0,1 Gew.-% Triazol oberflächig | 40 - 55 |
| 4 | Harnstoff + 1 Gew.-% Dicyandiamid + 0,1 Gew.-% Triazol eingeschmolzen | 35-50 |
| 5 | Harnstoff-Ammonsulfat (50 : 50) + 0,9 Gew.-% Al₂(SO₄)₃ • 14 H₂O | 25-40 |
| 6 | Harnstoff-Ammonsulfat (50 : 50) + 0,9 Gew.-% Al₂(SO₄)₃ • 14 H₂O + 0,65 Gew.-% Dicyandiamid eingeschmolzen + 0,065 Gew.-% Triazol oberflächig | 30-45 |
| 7 | wie Nr. 6, jedoch Dicyandiamid + Triazol eingeschmolzen | 25-40 |

Die Granalien waren durchweg behandelt mit wässrigem Polyvinylalkohol + Tensid (0,2 Gew.-%) und getrocknet auf H₂O-Gehalte <0,12 Gew.-%. Die Harnstoff-Ammonsulfat-Mischgranalien waren zusätzlich mit einem paraffinischen Hydrophobierungs- und Anti-backmittel versetzt worden.

### Beispiel 9

### Abriebtest

Im Falle des auf die Granalienoberfläche aufgebrachten Triazols muss dieses abriebfest sein, um die Zusammensetzung des durch den Dicyandiamid- und Triazol-Gehalt charakterisierten Düngers zu gewährleisten.

Im Abriebtest werden auf 0,1 mg Genauigkeit eingewogene und zuvor gesiebte ca. 150 g Granulat in einer unter Standardbedingungen rotierenden Trommel mit Einbauten 1 Stunde bei 80 Umdrehungen/Minute belassen. Danach wird die Probe erneut gesiebt und der Siebrückstand >1 mm ausgewogen und in Beziehung gesetzt zur Durchsatzmenge. Jede Messung wird mindestens dreimal wiederholt und daraus der Mittelwert gebildet. Nachstehende Ergebnisse wurden erhalten.

| **Lfd. Nr.** | **Produkt** | **Abrieb (Gew.-%)** |
|---|---|---|
| 1 | Harnstoff granuliert ohne Zusätze | 0,31 |
| 2 | Harnstoff + 1 Gew.-% Dicyandiamid eingeschmolzen + 0,1 Gew.-% Triazol oberflächig | 0,30 |
| 3 | Harnstoff+ 1 Gew.-% Dicyandiamid + 0,1 Gew.-% Triazol eingeschmolzen | 0,22 |
| 4 | Harnstoff-Ammonsulfat (50 : 50) + 0,9 Gew.-% Al₂(SO₄)₃ • 14 H₂O | 0,43 |
| 5 | Harnstoff-Ammonsulfat (50 : 50) + 0,9 Gew.-% Al₂(SO₄)₃ • 14 H₂O + 0,65 Gew.-% Dicyandiamid eingeschmolzen + 0,065 Gew.-% Triazol oberflächig | 0,46 |
| 6 | wie Nr. 5, jedoch Dicyandiamid + Triazol eingeschmolzen | 0,42 |

### Beispiel 10

### Granalienfestigkeit

Die Granalienfestigkeit ist ein für den Umschlag und die Lagerung im Haufwerk wichtiges Qualitätskriterium. Die statische Festigkeit wird an Granalien mit 3,15 mm Durchmesser durch Druckanwendung in einem Prüfgerät (Fa. Zwick) ermittelt und in N/Granalie gemessen. Der Wert wird aus 20 Einzelmessungen gemittelt.

| **Lfd. Nr.** | **Produkt** | **Statische Festigkeit (N/Granalie)** |
|---|---|---|
| 1 | Harnstoff granuliert ohne Zusätze | 32 - 35 |
| 2 | Harnstoff + 5 Gew.-% Dicyandiamid eingeschmolzen | 39-43 |
| 3 | Harnstoff + 1 Gew.-% Dicyandiamid eingeschmolzen | 30-33 |
| 4 | Harnstoff + 1 Gew.-% Dicyandiamid eingeschmolzen + 0,1 Gew.-% Triazol oberflächig | 30-33 |
| 5 | Harnstoff + 1 Gew.-% Dicyandiamid + 0,1 Gew.-% Triazol eingeschmolzen mit Al₂(SO₄)₃-Hydrat-Zusatz | 35-39 |
| 6 | Harnstoff-Ammonsulfat (50 : 50) + 0,9 Gew.-% Al₂(SO₄)₃ • 14 H₂O | 55-60 |
| 7 | Harnstoff-Ammonsulfat (50 : 50) + 0,9 Gew.-% Al₂(SO₄)₃ • 14 H₂O + 0,65 Gew.-% Dicyandiamid eingeschmolzen + 0,065 Gew.-% Triazol oberflächig | 52-57 |
| 8 | wie Nr. 7, jedoch Dicyandiamid + Triazol eingeschmolzen | 50-55 |

## Patentansprüche

1. Verfahren zur Herstellung von Dicyandiamid und 1,2,4-Triazol als Nitrifkationshemmer enthaltenden Düngemittelgranulaten auf Harnstoffbasis mit verbesserter 1,2,4-Triazol-Retention, **dadurch gekennzeichnet, dass**
a) das 1,2,4-Triazol in Form eines Gemisches mit mindestens einer seine Sublimation hemmenden Verbindung, die unter Polyvinylalkohol, Polyethylenimin, Harnstoff-Formaldehyd-Vorkondensaten oder Gemischen daraus ausgewählt wird, auf Dicyandiamid enthaltendes Düngemittelgranulat auf Harnstoffbasis aufgebracht wird, oder
b) das 1,2,4-Triazol in Form eines Gemisches mit Harnstoff-Formaldehyd-Vorkondensaten oder Aluminiumsulfathydraten als seine Sublimation hemmende Verbindungen mit Diyandiamid und Harnstoff granuliert wird.

2. Verfahren nach Anspruch 1, **dadurch gekennzeichnet, dass** im Falle der Alternative a) das Dicyandiamid enthaltende Düngemittelgranulat auf Harnstoffbasis außerdem Ammoniumsulfat enthält oder im Falle der Alternative b) die Granulation außerdem in Gegenwart von Ammoniumsulfat erfolgt.

3. Verfahren nach Anspruch 1, **dadurch gekennzeichnet, dass** der Polyvinylalkohol ein mittleres Molekulargewicht von 10.000 bis 90.000 besitzt.

4. Verfahren nach Anspruch 3, **dadurch gekennzeichnet, dass** der Polyvinylalkohol ein mittleres Molekulargewicht von 20.000 bis 50.000 besitzt.

5. Verfahren nach Anspruch 1, **dadurch gekennzeichnet, dass** die Harnstoff-Formaldehyd-Vorkondensate durch Umsetzung von Harnstoff, Formaldehyd und gegebenenfalls Ammoniak im Molverhältnis 1 : 1 : 0,8 hergestellt werden.

6. Verfahren nach Anspruch 1, **dadurch gekennzeichnet, dass** es sich bei den Aluminiumsulfat-Hydraten um solche mit mehr als 6 Kristallwassermolekülen handelt.

7. Verfahren nach einem der vorstehenden Ansprüche, **dadurch gekennzeichnet, dass** die fertigen Düngemittelgranulate auf Harnstoffbasis 2,0 bis 2,5 Gew.-%, bezogen auf den Stickstoffgehalt des Düngers, Dicyandiamid und 1,2,4-Triazol enthalten.

8. Verfahren nach einem der vorstehenden Ansprüche, **dadurch gekennzeichnet, dass** die fertigen Düngemittelgranulate auf Harnstoffbasis ein Gewichtsverhältnis Dicyandiamid/1,2,4-Triazol im Bereich 13 : 1 bits 7 : 1 aufweisen.

9. Verfahren nach einem der vorstehenden Ansprüche, **dadurch gekennzeichnet, dass** die fertigen Düngemittelgranulate auf Harnstoffbasis außerdem mit einem paraffinischen Hydrophobierungsmittel behandelt werden.

10. Verwendung von Polyvinylalkohol, Polyethylenimin, Harnstoff-Formaldehyd-Vorkondensaten oder Aluminiumsulfat-Hydraten als Sublimationshemmer für 1,2,4 Triazol für Dicyandiamid und 1,2,4-Triazol als Nitrifikationshemmer enthaltende Düngemittelgranulate auf Harnstoffbasis.

11. Verwendung nach Anspruch 10, **dadurch gekennzeichnet, dass** die Harnstoff-Formaldehyd-Vorkondensate durch Umsetzung von Harnstoff, Formaldehyd und gegebenenfalls Ammoniak im Molverhältnis 1 : 1 : 0,8 hergestellt werden.

12. Verwendung nach Anspruch 10, **dadurch gekennzeichnet, dass** es sich bei den Aluminiumsulfat-Hydraten um solche mit mehr als 6 Kristallwassermolekülen handelt.

## Claims

1. Method for producing urea-based fertilizer granules containing dicyandiamide and 1,2,4-triazole as nitrification inhibitors with improved 1,2,4-triazole retention, **characterised in that**
a) the 1,2,4-triazole in the form of a mixture with at least one compound inhibiting its sublimation, which is selected from polyvinyl alcohol, polyethylenimine, urea-formaldehyde precondensates or composites thereof, is applied to urea-based fertilizer granules containing dicyandiamide, or
b) the 1,2,4-triazole in the form of a mixture with urea-formaldehyde precondensates or aluminium sulfate hydrates as its sublimation inhibiting compounds is granulated with dicyandiamide and urea.

2. Method pursuant to claim 1, **characterised in that** the urea-based fertilizer granules containing dicyandiamide in addition contain aluminium sulfate in case of alternative a) or ammonium sulfate is present during granulation in case of alternative b).

3. Method pursuant to claim 1, **characterised in that** the polyvinyl alcohol has an average molecular weight of 10,000 to 90,000.

4. Method pursuant to claim 3, **characterised in that** the polyvinyl alcohol has an average molecular weight of 20,000 to 50,000.

5. Method pursuant to claim 1, **characterised in that** the urea-formaldehyde precondensates are produced by the reaction of urea, formaldehyde and possibly ammoniac in the molar ratio of 1:1:0.8.

6. Method pursuant to claim 1, **characterised in that** the aluminium sulfate hydrates contain more than six crystal water molecules.

7. Method pursuant to one of the above claims, **characterised in that** the finished urea-based fertilizer granules have, in relation to the fertilizer's nitrogen content, 2.0 to 2.5 wt% of dicyandiamide and 1,2,4-triazole.

8. Method pursuant to one of the above claims, **characterised in that** the finished urea-based fertilizer granules have a weight ratio dicyandiamide/1,2,4-triazole in the range of 13:1 to 7:1.

9. Method pursuant to one of the above claims, **characterised in that** the finished urea-based fertilizer granules are in addition treated with paraffinic hydrophobing agents.

10. Use of polyvinyl alcohol, polyethylenimine, urea-formaldehyde precondensates or aluminium sulfate hydrates as sublimation inhibitors for 1,2,4-triazole for urea-based fertilizer granules containing dicyandiamide and 1,2,4-triazole as nitrification inhibitors.

11. Method pursuant to claim 10, **characterised in that** the urea-formaldehyde precondensates are produced by the reaction of urea, formaldehyde and possibly ammoniac in the molar ratio of 1:1:0.8.

12. Use pursuant to claim 10, **characterised in that** the aluminium sulfate hydrates contain more than six crystal water molecules.

## Revendications

1. Procédé d'obtention de granulés d'engrais à base d'urée contenant de la dicyandiamide et du 1,2,4-triazole en tant qu'inhibiteur de nitrification avec une rétention améliorée du 1,2,4-triazole, **caractérisé en ce que**
a) le 1,2,4-triazole, sous la forme d'un mélange avec au moins un composé inhibant sa sublimation qui est choisi parmi l'alcool de polyvinyle, le polyéthylène imine, les précondensats d'urée-formaldéhyde, ou leurs mélanges, est appliqué sur des granulés d'engrais à base d'urée contenant du dicyanodiamide, ou
b) le 1,2,4-triazole sous la forme d'un mélange avec des précondensats d'urée-formaldéhyde ou d'hydrates de sulfate d'aluminium est granulé avec du dicyandiamide et de l'urée en tant que composés inhibant sa sublimation.

2. Procédé selon la revendication 1, **caractérisé en ce que** dans le cas de l'alternative 1 a) les granulés d'engrais à base d'urée contenant du dicyandiamide contiennent en outre du sulfate d'aluminium ou, dans le cas de l'alternative b) que la granulation a lieu en outre en présence de sulfate d'ammonium.

3. Procédé selon la revendication 1, **caractérisé en ce que** l'alcool polyvinylique a un poids moléculaire moyen de 10 000 à 90 000.

4. Procédé selon la revendication 3, **caractérisé en ce que** l'alcool polyvinylique a un poids moléculaire moyen de 20 000 à 50 000.

5. Procédé selon la revendication 1, **caractérisé en ce que** les précondensats d'urée-formaldéhyde sont préparés par réaction d'urée, de formaldéhyde et d'ammoniac éventuellement dans un rapport molaire de 1 : 1 : 0,8.

6. Procédé selon la revendication 1, **caractérisé en ce qu'**il s'agit de hydrates de sulfate d'aluminium avec plus de 6 molécules d'eau cristalline.

7. Procédé selon les revendications précitées, **caractérisé en ce que** les granulés d'engrais à base d'urée préparés de 2,0 à 2,5 % en poids par rapport à la teneur en azote de l'engrais contiennent du dicyanodiamide et du 1,2,4-triazole.

8. Procédé selon les revendications précitées, **caractérisé en ce que** les granulés d'engrais à base d'urée préparés ont un rapport en poids de dicyandiamide/1,2,4-triazole compris entre 13 : 1 à 7 : 1.

9. Procédé selon les revendications précitées, **caractérisé en ce que** les granulés d'engrais à base d'urée préparés sont en outre traités avec des agents hydrofuges paraffiniques.

10. Utilisation de granulés d'engrais à base d'urée contenant de l'alcool de polyvinyle, du polyéthylène imine, de l'urée-formaldéhyde, des précondensats ou des hydrates de sulfate d'aluminium en tant qu'inhibiteur de sublimation pour 1,2,4-triazole et pour dicyandiamide et du 1,2,4-triazole en tant qu'inhibiteur de nitrification.

11. Utilisation selon la revendication 10, **caractérisée en ce que** les précondensats d'urée-formaldéhyde sont préparés par réaction d'urée, de formaldéhyde et d'ammoniac éventuellement dans un rapport molaire de 1 : 1 : 0,8.

12. Utilisation selon la revendication 10, **caractérisée en ce qu'**il s'agit d'hydrates de sulfate d'aluminium avec plus de 6 molécules d'eau cristalline.
